# EUROPÄISCHE PATENTSCHRIFT

(11) **EP 3 380 769 B1**
(45) Veröffentlichungstag und Bekanntmachung des Hinweises auf die Patenterteilung: **08.01.2020**
(21) Anmeldenummer: 16795086.4
(22) Anmeldetag: 15.11.2016
(51) Int. Cl.: F16L 25/00

(54) **VERBINDUNGSANORDNUNG FÜR EIN FLUIDSYSTEM UND VERFAHREN ZUR HERSTELLUNG EINER VERBINDUNGSANORDNUNG**
CONNECTION ASSEMBLY FOR A FLUID SYSTEM AND METHOD FOR PRODUCING A CONNECTION ASSEMBLY
ENSEMBLE RACCORD POUR SYSTÈME FLUIDIQUE ET PROCÉDÉ DE FABRICATION D'UN ENSEMBLE RACCORD

(30) Priorität: 26.11.2015 DE 102015120508
(43) Veröffentlichungstag der Anmeldung: 03.10.2018
(73) Patentinhaber: NORMA Germany GmbH, 63477 Maintal (DE)
(72) Erfinder: BARATA, Claude, 54153 Briey (FR)
(74) Vertreter: Patentanwälte Olbricht Buchhold Keulertz
(86) Internationale Anmeldenummer: PCT/EP2016/077684
(87) Internationale Veröffentlichungsnummer: WO 2017/089172

(56) Entgegenhaltungen:
- EP-A1- 1 696 165
- DE-A1-102006 027 438
- US-A1- 2006 152 006

## Beschreibung

Die Erfindung betrifft eine Verbindungsanordnung für ein Fluidsystem gemäß dem Oberbegriff von Anspruch 1, sowie ein Verfahren zur Herstellung einer Verbindungsanordnung für ein Fluidsystem nach Anspruch 9.

Verbindungsanordnungen für ein Fluidsystem wie ein Kühlmittelsystem, beispielweise in einem Kraftfahrzeug, sind zur Verbindung einer (Kühlmittel-) Leitung mit einem Behälter oder einer weiteren Leitung geeignet. Hierfür wird häufig ein Wellrohr mit einer Wellenstruktur eingesetzt, da diese Wellenstruktur ein Biegen der Kühlmittelleitung ermöglicht und so ein Verlegen der Leitung erleichtert. In der Patentschrift DE 43 21 575 C1 ist ein Wellrohr für den Einsatz als Fluidleitung in Kraftfahrzeugen beschrieben. Die Endabschnitte des gezeigten Wellrohrs weisen glatte Enden ohne Wellungen auf. Dieses dient der Verbindung mit einem anderen Bauteil, weil die glatten Enden leichter auf ein Anschlusselement aufgeschoben und fixiert werden können. Diese glatten Enden werden nach gängiger Meinung vorgesehen um, auch bei auftretenden Druck- und Temperaturschwankungen die erforderliche Dichtigkeit gewährleisten zu können.

Nachteilig hierbei ist, dass je nach Anwendungsbereich und Anordnung der zu verbindenden Bauteile unterschiedliche Wellrohrlängen benötigt werden. Durch diese unterschiedlichen Längenerfordernisse müssen Wellrohre mit verschiedensten Längen und jeweils glatten Enden hergestellt und bereitgehalten werden. Zusätzlich muss gewährleistet werden, dass die Leitungen, die insbesondere als Kühlmittelleitungen ausgebildet sind, und Verbindungsanordnungen auch bei Überdruck und Temperaturschwankungen ihre Funktion und Dichtigkeit gewährleisten. Eine Verbindungsanordnung nach dem Stand der Technik ist aus der US 2006/152006 A1 bekannt.

Aufgabe der Erfindung ist es daher, die bestehenden Nachteile des Stands der Technik zu beseitigen, sowie eine Verbindungsanordnung mit einem Wellrohr als Leitung, beispielsweise als eine Kühlmittelleitung, und einem Verbindungselement zur Verfügung zu stellen, wobei unterschiedliche (Kühlmittel-) Leitungslängen mit geringem Aufwand herstellbar sind. Zusätzlich soll ein Verfahren zur Herstellung einer solchen Verbindungsanordnung bereitgestellt werden. Diese Verbindungsanordnung soll dabei kostengünstig herzustellen und einfach zu montieren sein Hauptmerkmale der Erfindung sind im kennzeichnenden Teil von Anspruch 1 und in Anspruch 9 angegeben. Vorteilhafte Ausgestaltungen sind Gegenstand der Ansprüche 2 bis 8 und 10.

Bei einer Verbindungsanordnung für ein Fluidsystem, insbesondere für ein Kühlmittelsystem, mit einer Leitung, insbesondere einer Kühlmittelleitung, und einem Verbindungselement, wobei die Leitung als Wellrohr mit einer Wellenstruktur ausgebildet ist und die Wellenstruktur bis zu mindestens einem Ende der Leitung reicht und das Ende des Wellrohrs mit einem Anschlussstutzen des Verbindungselements verbunden ist, wobei der Anschlussstutzen eine tannenbaumförmige Außenkontur aufweist, auf die das Ende der Leitung mit einer Aufstecklänge aufgeschoben ist, sieht die Erfindung vor, dass die Wellenstruktur am Ende der Leitung über die Aufstecklänge gestaucht ist.

Die erfindungsgemäße Verbindungsanordnung ermöglicht, dass ein Wellrohr mit gewelltem Ende mit einem Verbindungselement verbunden wird. Durch diese Bauweise kann die Rohrlänge des Wellrohrs auf das gewünschte Maß gekürzt werden und die Leitung auf die räumlichen Gegebenheiten des jeweiligen Fluidsystems angepasst werden. Ein glattes Ende des Wellrohrs oder ein anderes spezielles Anschlussstück zum Anschluss sind nicht mehr notwendig. Überaschenderweise hat sich herausgestellt, dass durch das Stauchen des auf den Anschlussstutzen aufgeschobenen Endes der Leitung nicht nur eine hohe Dichtigkeit der Verbindung erreicht wird, sondern auch hohe Abzugskräfte und Berstdrücke standgehalten werden können.

Für die erfindungsgemäße Verbindungsanordnung müssen keine verschiedenen Leitungen mit unterschiedlichen Längen hergestellt und bevorratet werden, welches die Herstellungs- und Lagerkosten reduziert. Bei der Montage der Leitungen kann flexibel auf die räumlichen Gegebenheiten vor Ort eingegangen und reagiert werden. Zudem ist die vorgesehene Verbindungsanordnung einfach ohne den Einsatz von Spezialwerkzeug zu montieren.

Die Verbindungsanordnung in der erfindungsgemäßen Bauweise ist fluiddicht ausgeführt und kann auch erhöhten Drücken, die insbesondere in Kühlmittelleitungen mitunter aufgrund von Temperaturschwankungen auftreten können, standhalten.

Vorteilhafterweise wird bei der erfindungsgemäßen Lösung die Leitung mit einer Innenseite unter radialer Vorspannung kraft- und reibschlüssig am Anschlussstutzen gehalten. Aufgrund dessen sind neben der tannenbaumförmigen Außenkontur keine weiteren Befestigungselemente vorgesehen.

Durch die Stauchung der Wellenstruktur können benachbarte Wellenberge der Wellenstruktur der Leitung über die Aufstecklänge zumindest teilweise aneinander anliegen. Diese Stauchung bewirkt, dass die Innenseite des Wellrohrs stärker an die tannenbaumförmige Außenkontur des Anschlussstutzens drückt und die radial nach innen gerichtete Kraft der Wellenstruktur erhöht wird, welches die Dichtigkeit und Stabilität der Verbindungsanordnung unterstützt.

In einer bevorzugten Ausgestaltung ist das Verbindungselement einstückig ausgebildet, wodurch die Herstellung und die Montage der Verbindungsanordnung vereinfacht und die Kosten reduziert werden.

Für die Formung einer fluiddichten Verbindungsanordnung eines Fluidsystems wie insbesondere eines Kühlmittelsystems ist es bevorzugt, dass die tannenbaumförmige Außenkontur des Anschlussstutzens einen Außendurchmesser aufweist, der mindestens einem kleinsten Innendurchmesser der nicht gestauchten Leitung entspricht. Dadurch wird gewährleistet, dass die Funktion der Verbindungsanordnung auch bei geringer Stauchung des Wellrohrs erhalten bleibt und ausreichende radiale Vorspannkräfte erzeugt werden.

In einer bevorzugten Ausgestaltung weist die tannenbaumförmige Außenkontur des Anschlussstutzens mindestens eine in Radialrichtung vorstehende ringförmige Erhebung auf, die aus einer Anlauffläche und einer Haltekante gebildet ist. Die Anlauffläche und die Haltekante sind miteinander verbunden, wobei die Anlauffläche und die Haltekante in einem Winkel von 10 bis 90° zueinander angeordnet sind.

Durch diese Ausgestaltung kann das Wellrohr auf den Anschlussstutzen geschoben werden, wobei die Anlauffläche einen möglichst geringen Widerstand in Aufschubrichtung darstellt. Sobald ein Wellental die Erhebung der tannenbaumförmigen Außenkontur des Anschlussstutzens überwunden hat, verhindert die Haltekante ein Zurückrutschen der Leitung. Basierend auf der beschriebenen Stauchung wird nach Aufschieben der Leitung auf den Anschlussstutzen die Innenkontur des Wellrohrs gegen die tannenbaumförmige Außenkontur des Anschlussstutzens gedrückt, dadurch werden die gegen einen Abzug wirkenden Kräfte weiter erhöht. Die Verbindungsanordnung kann somit noch höheren Innendrücken innerhalb des Fluidsystems standhalten.

In einer Fortbildung weist die tannenbaumförmige Außenkontur mehrere ringförmige Erhebungen auf, wodurch der vorhergehend beschriebene Halteeffekt noch verstärkt wird.

Gemäß einer bevorzugten Ausgestaltung weist die Leitung eine gewellte Außen- und dazu parallele Innenkontur auf, die bis zu dem mindestens einem Ende der Leitung ausgebildet sind. Durch die Verwendung einer innen und außen gewellten Leitung kann eine gute Flexibilität erreicht werden, wodurch die Leitung leichter in beispielsweise einem Kraftfahrzeug eingebaut werden kann. Eine gewellte Innenkontur gewährleistet zudem eine ausreichende Haltekraft der tannenbaumförmigen Außenkontur des Anschlussstutzens zu der Leitung.

Die Leitung weist in einer bevorzugten Ausführungsform ein Polyamid auf. In einer alternativen Variante weist die Leitung Gummi auf. Beide Materialien sind gut geeignet, um eine fluiddichte Leitung auszubilden. Dabei kann das Material mit den passenderen chemischen und physikalischen Eigenschaften je nach notwendigen Anforderungen ausgewählt werden.

Die Leitung weist in einer bevorzugten Ausführungsform einen Innendurchmesser von 10 bis 30 mm, insbesondere von 10 bis 15 mm auf. Bei diesem Durchmesser kann eine ausreichende Zu- und Abführung von Fluid wie beispielsweise Kühlflüssigkeit gewährleistet werden.

In favorisierten Ausführungsformen weist das Verbindungselement auf der dem Anschlussstutzen mit tannenbaumförmiger Außenkontur abgewandten Seite eine weitere Anschlussstruktur zur Befestigung der Verbindungsanordnung an einen Behälter, Tank oder ein weiteres Rohr auf. Dabei kann dieses weitere Verbindungselement beispielweise als Steckverbindung oder Schraubverbindung vorgesehen sein. Alternativ kann das Verbindungselement auch fest mit einem Behälter oder ähnlichem verbunden sein.

Zusätzlich betrifft die erfindungsgemäße Lösung ein Verfahren zur Herstellung einer Verbindungsanordnung eines Fluidsystems wie eines Kühlmittelsystems. Dabei wird die Leitung bzw. Kühlmittelleitung auf einer gewünschten Länge abgeschnitten und das Ende der Leitung auf die tannenbaumförmige Außenkontur des Anschlussstutzens derart aufgeschoben, dass die Wellenstruktur der Kühlmittelleitung über die Aufstecklänge gestaucht wird.

Mittels dieses Verfahrens kann eine Verbindungsanordnung nach oben beschriebener Art hergestellt werden. Die Leitung, welche als Wellrohr mit einer Wellenstruktur ausgebildet ist, kann auf die benötigte und gewünschte Länge gekürzt werden, bevor sie mit dem Verbindungselement verbunden wird. Das Abschneiden der Leitung auf die entsprechende Länge kann bereits vor der Auslieferung oder direkt bei der Montage vor Ort einfach durchgeführt werden. Dieses ist möglich, da keine speziellen Anschlussenden, beispielweise in Form von glatten Enden, mehr notwendig sind. Nach Aufschieben des Wellrohrs auf den Anschlussstutzen des Verbindungselements liegt die Innenkontur des Wellrohrs teilweise an der Außenkontur des Anschlussstutzens an. Durch die Stauchung wird die Innenkontur des Wellrohrs weiter angedrückt und über die Aufstecklänge radial nach innen gerichteten Kräfte erzeugt, die auf den Anschlussstutzen ausgeübt werden. Diese Kräfte sind dichtigkeitsfördernd und wirken einem Abziehen der Leitung entgegenwirken. Durch diese Effekte wird eine fluiddichte, haltbare Verbindungsanordnung erhalten, bei der überraschenderweise keine weiteren Befestigungselemente zwischen Leitung und Anschlussstutzen mehr benötigt werden.

Zusätzlich kann mit diesem Verfahren eine Verbindungsanordnung hergestellt werden, die auch erhöhten Drücken standhält. Der übliche Betriebsdruck einer Leitung wie einer Kühlmittelleitung kann so problemlos bei 2,5 bar und mehr liegen. Auch ist die Verbindungsanordnung temperaturbeständig, welches ebenfalls für eine Gewährleistung der Funktion der Verbindungsanordnung während des Betriebs des Fluidsystems wie eines Kühlmittelsystems notwendig ist.

Durch die Stauchung des Wellrohrs beim Aufschieben auf den Anschlussstutzen wird die Länge des Wellrohrs gegenüber einem nicht verbundenen Zustand verkürzt. Dabei ist bevorzugt, dass die Stauchung die Leitung über die Aufstecklänge um 25 bis 50 % verkürzt.

Eine Stauchung, die zu einer Verkürzung in diesem prozentualen Bereich führt, erzeugt ausreichend hohe radial nach innen gerichtete und gegen einen Abzug wirkende Kräfte, so dass ein dauerhafter, sicherer Betrieb des Fluidsystems mit einer derart hergestellten Verbindungsanordnung gewährleistet werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen.

Es zeigen:
- Fig. 1: eine erfindungsgemäße Verbindungsanordnung,
- Fig. 2: Bestandteile einer Verbindungsanordnung.

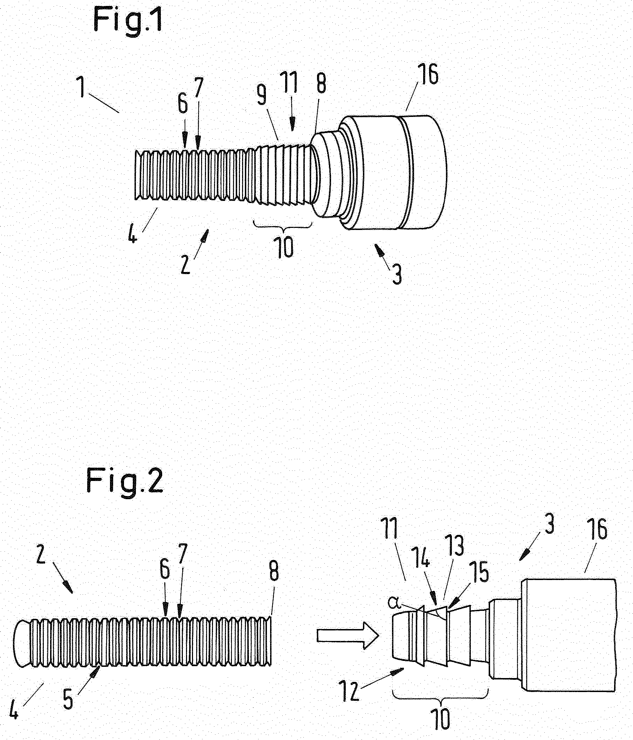

Fig. 1 zeigt eine erfindungsgemäße Verbindungsanordnung 1 für ein als Kühlmittelsystem ausgebildetes Fluidsystem, beispielweise eines Kraftfahrzeugs. Die beiden Bestandteile der Verbindungsanordnung 1 - eine als Kühlmittelleitung Leitung 2 und ein Verbindungselement 3 - sind in Fig. 2 gezeigt. Die Kühlmittelleitung 2 ist als Wellrohr 4 mit einer Wellenstruktur 5 ausgebildet, wobei die Wellenstruktur 5 in Wellenberge 6 und Wellentäler 7 aufgeteilt werden kann. Das Wellrohr 4 kann wie in Fig. 1 dargestellt als Wellrohr 4 mit einer parallelen Wellenstruktur 5 oder aber mit einer spiralförmigen Wellenstruktur ausgebildet sein. Diese zweite Art von Wellrohr 4 ist nicht in den Figuren dargestellt. Die Wellenstruktur 5 reicht bis zu mindestens einem Ende 8 der Kühlmittelleitung 2. Da kein glattes Endstück oder eine andere spezielle Anschlussstruktur am Wellrohrende 8 benötigt wird, ist ein Anpassen der Länge der Kühlmittelleitung 2 auf die gewünschte Länge problemlos möglich. Das Wellrohr 4 kann beispielweise abgeschnitten werden, wobei ein Längenverlust aufgrund einer Stauchung 9 (Fig. 1) der Wellenstruktur 5 am Ende 8 des Wellrohr 4 über die Aufstecklänge 10 mit eingerechnet werden muss.

Das Verbindungselement 3 weist einen Anschlussstutzen 11 mit einer tannenbaumförmigen Außenkontur 12 auf, auf die das Ende 8 der Kühlmittelleitung 2 mit der Aufstecklänge 10 aufgeschoben wird. Die tannenbaumförmige Außenkontur 12 des Anschlussstutzens 11 wird durch mindestens eine in Radialrichtung vorstehende, ringförmige Erhebung 13 gebildet, welche eine Anlauffläche 14 und eine Haltekante 14 aufweist, die über einen Winkel α verbunden sind. Die Anlauffläche 15 dient dazu, dass die Kühlmittelleitung 2 beim Aufschieben auf den Anschlussstutzen 11 nur einen geringen Widerstand erfährt. Ist das Wellrohr 4 dann auf den Anschlussstutzen 11 aufgeschoben, verhindert die Haltekante 14 ein Zurückrutschen der Leitung 2. Die tannenbaumförmige Außenkontur 12 umfasst optional mehrere Erhebungen 13.

An dem Verbindungselement 3 kann zusätzlich zu dem Anschlussstutzen 11 noch eine weitere Anschlussstruktur 16 vorgesehen sein, die einen Anschluss der Verbindungsanordnung 1 an einen Behälter, Tank oder anderes Rohr ermöglicht. Weiterhin ist das gesamte Verbindungselement 3 mit einem in Axialrichtung offenen, inneren Hohlraum ausgebildet, der einen Fluiddurchfluss ermöglicht. Die Verbindungsanordnung 1 ist außer für Kühlmittel auch für andere Fluide einsetzbar.

Die Kühlmittelleitung 2, beziehungsweise das Wellrohr 4, werden direkt auf den Anschlussstutzen 11 mit tannenbaumförmiger Außenkontur 12 aufgesteckt. Somit ist die Montage sehr einfach, schnell und ohne spezielles Werkzeug durchzuführen.

In Fig. 1 ist die Stauchung 9 der Wellenstruktur 5 der Kühlmittelleitung 2 über die Aufstecklänge 10 zu erkennen. Durch die Stauchung 9 liegen benachbarte Wellenberge 6 über die Aufstecklänge 10 zumindest teilweise aneinander. Die Stauchung 9 bewirkt, dass die Innenkontur des Wellrohrs 2 der tannenförmigen Außenkontur 12 des Anschlussstutzens 11 angedrückt wird. Dadurch werden radial nach innen wirkende Kräfte erzeugt, die eine fluiddichte Verbindungsanordnung 1 gewährleisten. Zusätzlich werden durch die Stauchung 9 diejenigen Kräfte verstärkt, die einem Abzug des Wellrohrs 2 entgegenwirken. Dadurch ist auch ein Betrieb des Kühlmittelsystems bei Überdruck möglich.

Die Erfindung ist nicht auf eine der vorbeschriebenen Ausführungsformen beschränkt, sondern in vielfältiger Weise abwandelbar. Insbesondere bevorzugt ist dabei der Einsatz der erfindungsgemäßen Verbindungsanordnung in einem als Kühlmittelsystem ausgebildeten Fluidsystem, bei der die Leitung als Kühlmittelleitung dient. Daher dient als Ausführungsbeispiels ein Kühlmittelsystem mit einer Kühlmittelleitung. Allgemein ist unter einem Fluidsystem ein System zum Leiten und gegebenenfalls Verteilen von Flüssigkeiten zu verstehen.

### Bezugszeichenliste

- 1: Verbindungsanordnung
- 2: (Kühlmittel-) Leitung
- 3: Verbindungselement
- 4: Wellrohr
- 5: Wellenstruktur
- 6: Wellenberge
- 7: Wellentäler
- 8: Ende der Kühlmittelleitung 2
- 9: Stauchung
- 10: Aufstecklänge
- 11: Anschlussstutzen
- 12: tannenbaumförmige Außenkontur
- 13: Erhebung
- 14: Anlauffläche
- 15: Haltekante
- 16: Anschlussstruktur
- α: Winkel zwischen Anlauffläche 15 und Haltekante 16

## Patentansprüche

1. Verbindungsanordnung (1) für Fluidsystem, insbesondere für ein Kühlmittelsystem, mit einer Leitung, insbesondere einer Kühlmittelleitung (2), und einem Verbindungselement (3), wobei die Leitung (2) als Wellrohr (4) mit einer Wellenstruktur (5) ausgebildet ist, wobei die Wellenstruktur (5) bis zu mindestens einem Ende (9) der Leitung (2) reicht, wobei das Ende (8) des Wellrohrs (2) mit einem Anschlussstutzen (11) des Verbindungselements (3) verbunden ist, wobei der Anschlussstutzen (11) eine tannenbaumförmige Außenkontur (12) aufweist, auf die das Ende (8) der Leitung (2) mit einer Aufstecklänge (10) aufgeschoben ist **dadurch gekennzeichnet, dass** die Wellenstruktur (5) am Ende (8) der Leitung (2) über die Aufstecklänge (10) gestaucht ist.

2. Verbindungsanordnung (1) für ein Fluidsystem nach Anspruch 1 **dadurch gekennzeichnet, dass** die Leitung (2) mit einer Innenseite unter radialer Vorspannung kraft- und reibschlüssig am Anschlussstutzen (11) gehalten ist.

3. Verbindungsanordnung (1) für ein Fluidsystem nach einem der vorangegangenen Ansprüche **dadurch gekennzeichnet, dass** benachbarte Wellenberge (6) der Wellenstruktur (5) über die Aufstecklänge (10) zumindest teilweise aneinander liegen.

4. Verbindungsanordnung (1) für ein Fluidsystem nach einem der vorangegangenen Ansprüche **dadurch gekennzeichnet, dass** die tannenbaumförmige Außenkontur (12) des Anschlussstutzens (11) einen Außendurchmesser aufweist, der mindestens einem kleinsten Innendurchmesser der nicht gestauchten Leitung (2) entspricht.

5. Verbindungsanordnung (1) für ein Fluidsystem nach einem der vorangegangenen Ansprüche **dadurch gekennzeichnet, dass** die Leitung (2) eine gewellte Außenkontur und dazu parallele Innenkontur aufweist, die bis zu dem mindestens einem Ende (8) der Leitung (2) ausgebildet sind.

6. Verbindungsanordnung (1) für ein Fluidsystem nach einem der vorangegangenen Ansprüche **dadurch gekennzeichnet, dass** die Leitung (2) ein Polyamid aufweist.

7. Verbindungsanordnung (1) für ein Fluidsystem nach einem der Ansprüche 1 bis 6 **dadurch gekennzeichnet, dass** die Leitung (2) ein Gummi aufweist.

8. Verbindungsanordnung (1) für ein Fluidsystem nach einem der vorangegangenen Ansprüche **dadurch gekennzeichnet, dass** die Leitung (2) einen Innendurchmesser von 10 bis 30 mm, insbesondere von 10 bis 15 mm aufweist.

9. Verfahren zur Herstellung einer Verbindungsanordnung (1) nach einem der vorangegangenen Ansprüche **dadurch gekennzeichnet, dass** die Leitung (2) auf einer gewünschten Länge abgeschnitten wird und das Ende (8) der Leitung (2) auf die tannenbaumförmige Außenkontur (12) des Anschlussstutzens (11) derart aufgeschoben wird, dass die Wellenstruktur (5) der Leitung (2) über die Aufstecklänge (9) gestaucht wird.

10. Verfahren zur Herstellung einer Verbindungsanordnung (1) nach Anspruch 9 **dadurch gekennzeichnet, dass** die Stauchung (9) die Leitung (2) über die Aufstecklänge (10) um 25 bis 50 % verkürzt.

## Claims

1. Connection assembly (1) for a fluid system, in particular for a cooling-agent system, with a line, in particular a cooling-agent line (2), and a connection element (3), wherein the line (2) is in the form of a corrugated tube (4) with a corrugated structure (5), wherein the corrugated structure (5) extends until at least one end (9) of the line (2), wherein the end (8) of the corrugated tube (2) is connected with a connection piece (11) of the connecting element (3), wherein the connection piece (11) has a fir-tree-shaped outer contour (12) on which the end (8) of the line (2) is pushed with an emplacement length (10) **characterised in that** the corrugated structure (5) at the end (8) of the line (2) is squeezed over the emplacement length (10).

2. Connection assembly (1) for a fluid system according to claim 1 **characterised in that** the line (2) is held with an inner side under radial bias in a force-fitting and friction-fitting manner on the connection piece (11).

3. Connection assembly (1) for a fluid system according to any of the preceding claims **characterised in that** adjacent corrugation peaks (6) of the corrugated structure (5) contact one another at least partially across the emplacement length (10).

4. Connection assembly (1) for a fluid system according to any of the preceding claims **characterised in that** the fir-tree-shaped outer contour (12) of the connection piece (11) has an external diameter which is equal to at least a smallest inner diameter of the not-squeezed line (2).

5. Connection assembly (1) for a fluid system according to any of the preceding claims **characterised in that** the line (2) has a corrugated outer contour and an inner contour parallel thereto which are formed until the at least one end (8) of the line (2).

6. Connection assembly (1) for a fluid system according to any of the preceding claims **characterised in that** the line (2) is made of a polyamide.

7. Connection assembly (1) for a fluid system according to any of claims 1 to 6 **characterised in that** the line (2) is made of a rubber.

8. Connection assembly (1) for a fluid system according to any of the preceding claims **characterised in that** the line (2) has an internal diameter of 10 to 30 mm, in particular 10 to 15 mm.

9. Method for the production of a connection assembly (1) according to any of the preceding claims **characterised in that** the line (2) is cut off to a desired length and the end (8) of the line (2) is pushed onto the fir-tree-shaped outer contour (12) of the connection piece (11) such that the corrugated structure (5) of the line (2) is squeezed over the emplacement length (9).

10. Method for the production of a connection assembly (1) according to claim 9 **characterised in that** the squeezing (9) shortens the line (2) across the emplacement length (10) by 25 to 50%.

## Revendications

1. Ensemble raccord (1) pour un système fluidique, en particulier pour un système de refroidissement, avec une conduite, en particulier une conduite de fluide de refroidissement (2), et un élément raccord (3), dans lequel la conduite (2) est réalisée comme tube ondulé (4) avec une structure ondulée (5), dans lequel la structure ondulée (5) parvient jusqu'à au moins une extrémité (9) de la conduite (2), dans lequel l'extrémité (8) du tube ondulé (2) est reliée à une tubulure de raccordement (11) de l'élément raccord (3), dans lequel la tubulure de raccordement (11) présente un contour extérieur (12) en forme de sapin, sur lequel l'extrémité (8) de la conduite (2) avec une longueur d'emboîtement (10) est emboîtée, **caractérisé en ce que** la structure ondulée (5) est comprimée au niveau de l'extrémité (8) de la conduite (2) sur la longueur d'emboîtement (10).

2. Ensemble raccord (1) pour un système fluidique selon la revendication 1, **caractérisé en ce que** la conduite (2) est maintenue avec un côté intérieur sous précontrainte radiale à force et par friction au niveau de la tubulure de raccordement (11).

3. Ensemble raccord (1) pour un système fluidique selon l'une des revendications précédentes, **caractérisé en ce que** des crêtes d'onde (6) contiguës de la structure ondulée (5) se trouvent au moins partiellement les unes au niveau des autres sur la longueur d'emboîtement (10).

4. Ensemble raccord (1) pour un système fluidique selon l'une des revendications précédentes, **caractérisé en ce que** le contour extérieur (12) en forme de sapin de la tubulure de raccordement (11) présente un diamètre extérieur qui correspond au moins à un diamètre intérieur le plus petit de la conduite non comprimée (2).

5. Ensemble raccord (1) pour un système fluidique selon l'une des revendications précédentes, **caractérisé en ce que** la conduite (2) présente un contour extérieur ondulé et un contour intérieur parallèle à celui-ci qui sont réalisés jusqu'à l'au moins une extrémité (8) de la conduite (2).

6. Ensemble raccord (1) pour un système fluidique selon l'une des revendications précédentes, **caractérisé en ce que** la conduite (2) présente un polyamide.

7. Ensemble raccord (1) pour un système fluidique selon l'une des revendications 1 à 6, **caractérisé en ce que** la conduite (2) présente un caoutchouc.

8. Ensemble raccord (1) pour un système fluidique selon l'une des revendications précédentes, **caractérisé en ce que** la conduite (2) présente un diamètre intérieur de 10 à 30 mm, en particulier de 10 à 15 mm.

9. Procédé de fabrication d'un ensemble raccord (1) selon l'une des revendications précédentes, **caractérisé en ce que** la conduite (2) est découpée à une longueur souhaitée et l'extrémité (8) de la conduite (2) est emboîtée sur le contour extérieur (12) en forme de sapin de la tubulure de raccordement (11) de telle manière que la structure ondulée (5) de la conduite (2) soit comprimée sur la longueur d'emboîtement (9).

10. Procédé de fabrication d'un ensemble raccord (1) selon la revendication 9, **caractérisé en ce que** la compression (9) raccourcit la conduite (2) sur la longueur d'emboîtement (10) de 25 à 50 %.
